# EUROPÄISCHE PATENTSCHRIFT

(11) **EP 0 823 318 B1**
(45) Veröffentlichungstag und Bekanntmachung des Hinweises auf die Patenterteilung: **01.03.2000**
(21) Anmeldenummer: 97113812.8
(22) Anmeldetag: 09.08.1997
(51) Int. Cl.: B29C 47/02, E06B 3/673

(54) **Verfahren und Vorrichtung zum Auftragen eines plastischen Abstandhalters auf eine Glasplatte**
Process and device for applying a plastic spacer to a glass pane
Procédé et dispositif d'application d'un élément d'écartement en plastique sur une plaque de verre

(30) Priorität: 09.08.1996 DE 19632062
(43) Veröffentlichungstag der Anmeldung: 11.02.1998
(73) Patentinhaber: Lenhardt Maschinenbau GmbH, D-75242 Neuhausen-Hamberg (DE)
(72) Erfinder: Schuler, Peter, 75233 Tiefenbronn (DE)
(74) Vertreter: Twelmeier, Ulrich, Dipl. Phys.

(56) Entgegenhaltungen:
- WO-A-96/09456
- US-A- 3 957 406
- US-A- 4 581 276
- US-A- 5 273 704

## Beschreibung

Die Erfindung geht aus von einem Verfahren zum Auftragen eines Strangs aus einer plastischen Substanz auf eine Glastafel zur Ausbildung eines Abstandhalters mit vorgegebener Solldicke für eine Isolierglasscheibe mit Hilfe einer Düse, welche längs des Randes der Glastafel um diese herum bewegt wird und dabei den aus der Düse austretenden Strang auf die Glastafel so ablegt, daß Anfang und Ende des Strangs zusammenstoßen, indem die Dicke des Strangs beim Austreten aus der Düse am Anfang auf einer Strecke mit vorbestimmter Länge von Null auf die Solldicke gesteigert und komplementär dazu am Ende des Strangs auf derselben Strecke von der Solldicke auf Null verringert wird. Ein solches Verfahren ist aus der WO 96/09456 bekannt. Nach dem bekannten Verfahren wird der plastische Strang derart extrudiert und auf die Glastafel gelegt, daß Anfang und Ende des Stranges nicht stumpf zusammenstoßen, sondern über eine Schrägfläche, welche in einem von 90° verschiedenen Winkel zur Ebene der Glastafel verläuft. Das Verfahren wird durchgeführt mit Hilfe einer Düse, deren Austrittsquerschnitt durch einen Schieber veränderlich ist und vollständig geschlossen werden kann und die, während sie an der Glastafel entlang bewegt wird, von dieser auch abgehoben werden kann. Zwischen Anfang und Ende des Strangs entsteht bei der bekannten Arbeitsweise eine Fuge, welche beim Zusammenbau und beim anschließenden Verpressen der Isolierglasscheibe unter Druck gesetzt wird. Dadurch werden die beiden am Anfang und am Ende des Stranges gebildeten Schrägflächen gegeneinander gepreßt und verkleben dicht miteinander. Eine Schwierigkeit des bekannten Verfahrens ergibt sich daraus, daß bei der bevorzugten Arbeitsweise mit annährend senkrecht angeordneten Glastafeln der aus erwärmtem thermoplastischen Material, insbesondere aus einem Polyisobutylen, bestehende Strang noch weich ist, wenn er auf die Glastafel aufgetragen wird, und vor allem bei waagerechtem Verlauf schwerkraftbedingt dazu neigt, abzukippen. Erschwerend kommt hinzu, daß die Mündung der Düse, deren Bewegungsrichtung entgegengesetzt ausgerichtet ist, den Strang annähernd parallel, allenfalls unter einem kleinen spitzen Winkel auf die Glastafel ablegt, so daß die Haftung des Strangs auf der Glastafel nicht optimal ist. Die Orientierung der Mündung der Düse ist deshalb so gewählt, damit man unterbrechungslos den Strang auch an den Ecken der Glastafel extrudieren kann, wozu es erforderlich ist, die Düse um eine zur Glastafel senkrechte Achse, welche in der Mündungsebene liegt, drehen zu können. Nachteilig ist der geringe Druck, mit dem der Strang auf die Glastafel aufgetragen wird, aber auch im Hinblick auf eine wasserdampfdichte Verklebung des Strangs mit der Glastafel, welche für eine hohe Lebensdauer der Isolierglasscheibe unerläßlich ist.

Der Erfindung liegt die **Aufgabe** zugrunde, eine Maßnahme anzugeben, mit welcher den genannten Nachteilen, insbesondere dem Entstehen von Schwachstellen in der Dichtung von Isolierglasscheiben, deren plastischer Abstandhalter nach dem eingangs genannten Verfahren gebildet wird, entgegengewirkt werden kann.

Diese Aufgabe wird gelöst durch ein Verfahren mit den im Patentanspruch 1 angegebenen Merkmalen und durch eine Vorrichtung mit den im Patentanspruch 8 angegebenen Merkmalen. Vorteilhafte Weiterbildungen der Erfindung sind Gegenstand der abhängigen Ansprüche.

Aus der WO 96/09456 ist es bereits bekannt, daß es vorteilhaft ist, die Oberseite des Strangs, welche mit der zweiten Glastafel verklebt wird, schwach konkav gewölbt auszubilden. Dadurch lassen sich Lufteinschlüsse in der Klebefläche beim Verpressen mit der zweiten Glastafel vermeiden.

An der Unterseite des Strangs wird statt dessen eine gegenteilige Maßnahme bevorzugt, indem die Kontur der Mündung der Düse so gestaltet wird, daß der Strang mit einer schwach konkaven Unterseite auf die erste Glastafel aufgetragen wird. Unerwarteterweise hat sich nämlich gezeigt, daß sich dadurch eine optimale Haftung des Strangs auf der ersten Glastafel erreichen läßt. Das liegt daran, daß in dem plastischen Material, insbesondere wenn es sich um ein Polyisobutylen handelt, innere Spannungen herrschen, die bestrebt sind, eine konvex gespritzte Oberfläche stärker zu krümmen oder eine eben gespritzte Oberfläche zu krümmen. Die inneren Spannungen in dem plastischen Material sind bestrebt, die Krümmung einer schwach konkav gespritzten Oberfläche zu verringern, so daß sie durch den Abbau der inneren Spannungen zu einer ebenen Oberfläche werden kann, was für die Haftung auf der ersten Glastafel optimal ist und - wenn wie bevorzugt mit annähernd senkrecht angeordneten Glastafeln gearbeitet wird - einem Abkippen des Strangs von der Glastafel infolge Schwerkrafteinwirkung wirksam begegnet.

In vorteilhafter Weiterbildung der Erfindung wird durch eine pfiffige Zusatzmaßnahme die Haftung des Strangs auf der Glastafel nicht nur auf seiner gesamten Länge, sondern insbesondere auch im besonders kritischen Bereich der Stoßstelle zwischen Anfang und Ende des Strangs verbessert.

Um den Winkel zwischen der Glastafel und der Spitze der Schrägfläche am Anfang des plastischen Strangs bei der Bildung der Stoßstelle, mit der plastischen Substanz ausfüllen zu können, wenn sich die Düse am Ende ihres Umlaufs um die Glastafel der Spitze des darauf bereits abgelegten Stranges wieder nähert, müßte die Substanz mit hinreichend hohem Druck in diesen Winkel gespritzt werden. Das ist jedoch deshalb schwierig, weil die Mündung der Düse, wie gesagt, in einer zur Ebene der Glastafel senkrechten Ebene liegt, um mit der Düse, welche um eine in dieser Ebene liegende, zur Glastafel senkrechte Achse drehbar ist, unterbrechungsfrei eine einwandfrei geformte Ecke extrudieren zu können. Die Folge davon ist, daß der Strang parallel oder allenfalls in einem spitzen Winkel zur Glastafel austritt und nur mit geringem Druck auf die Glastafel trifft. Es ist deshalb schwierig, den an der Spitze des anfänglichen keilförmigen Abschnitts des plastischen Strangs im Fließschatten des aus der Düse austretenden Materials liegenden Winkel zwischen der Spitze und der Glastafel lückenlos mit dem plastischen Material zu füllen, wenn die Düse am Ende ihres Umlaufs um die Glastafel wieder zum Anfang des Strangs zurückkehrt. Verbleibt dort eine Lücke, und sei es auch nur eine enge Kapillare, dann kann man leider nicht erwarten, daß diese während des nachfolgenden Verpressens der Isolierglasscheibe, bei welchem der plastische Abstandhalter gestaucht wird, in jedem Fall verschwindet. Die im Abstandhalter herrschende Kohäsion bewirkt nämlich, daß trotz des Verpressens das plastische Material im Grenzbereich zu der Glastafel, auf die es extrudiert wurde, nicht mehr oder kaum noch fließt, zumal wenn es sich nach dem Auftragen in heißem Zustand (wie es bei thermoplastischem Polyisobutylen üblich ist) im Kontakt mit der kalten Glastafel abgekühlt und verfestigt hat.

Erfindungsgemäß wird diesen Problemen dadurch begegnet, daß mit der Düse zuerst ein Film aus der plastischen Substanz mit einer gewissen Länge aufgetragen und erst daran anschließend weiterverfahren wird, wie es in der WO 96/09456 offenbart wurde, indem anschließend an das Auftragen des Films die Dicke des Strangs beim Austreten aus der Düse auf einer Strecke mit vorbestimmter Länge L von der Dicke des Films ausgehend auf die Solldicke D des Strangs gesteigert und komplementär dazu am Ende des Strangs dieser auf derselben Strecke L von der Solldicke D auf Null verringert wird, was durch fortschreitendes Schließen der Düse erreichbar ist.

Am Anfang des Strangs setzt sich dessen Spitze also in einen Film fort. Der Übergang von diesem Film in die Schrägfläche am Anfang des Strangs erfolgt durch das fortschreitende Öffnen der sich an der Glastafel entlangbewegenden Düse nicht abrupt, sondern fließend und kann beim Extrudieren des Endes des Strangs durch die pastöse Substanz viel leichter vollständig und dicht überdeckt werden als der Übergang von der Schrägfläche an der Spitze des Strangs zur Glastafel beim Stand der Technik gemäß der WO 96/09456. An der Spitze des Films sind die geometrischen Bedingungen für eine absolut dichte Verbindung des Endes des Stranges mit der Glastafel viel günstiger als beim Stand der Technik an der durch eine Schrägfläche begrenzten Spitze des Strangs, und zwar um so günstiger, je dünner der Film ist, der auf die Glastafel aufgetragen wird. Zweckmäßigerweise wird der Film in einer Dicke von nicht mehr als 0,3mm, vorzugsweise in einer Dicke von nur 0,1mm bis 0,2mm aufgetragen. Die Mindestdikke des Films sollte danach bemessen werden, daß der Film unterbrechungsfrei aufgetragen werden kann.

Die Länge des Films ist nicht sonderlich kritisch. Mit einem Film, welcher einige wenige Zentimeter lang ist, kommt man zum Ziel. Bevorzugt wird eine Länge des Films von 0,5cm bis 1cm.

Wenn die Schrägfläche am Ende des Strangs gebildet und auf die am Beginn des Strangs gebildete Schrägfläche gelegt wird, um Anfang und Ende des Strangs dicht miteinander zu verbinden, dann ist es nicht erforderlich, die am Ende des Strangs gebildete Schrägfläche in einen Film fortzusetzen, welcher auf den bereits auf der Glastafel liegenden Strang gelegt würde. An dieser von der Glastafel abgewandten Stelle der Verbindung von Anfang und Ende des Strangs ist die Wahrscheinlichkeit, daß zwischen dem Strang und der zweiten, noch anzufügenden Glastafel ein die Wasserdampfdiffusion erleichternder Kanal verbleibt, außerordentlich gering, weil sich das Andrücken der zweiten Glastafel unmittelbar auf die angrenzende Oberfläche des Strangs auswirkt und zu einer lükkenlosen Verbindung mit der zweiten Glastafel führt, im Gegensatz zur Klebefläche zwischen der gegenüberliegenden ersten Glastafel und dem Strang, welche durch das Andrücken der zweiten Glastafel nicht mehr in dem Ausmaß beeinflußbar ist wie die Klebefläche zwischen dem Strang und der zweiten Glastafel. Es ist aber durchaus möglich, auch beim Schließen der Düse einen dünnen, kurzen Film zu bilden, welcher auf den bereits gebildeten Strang abgelegt und mit ihm verpreßt wird.

Zur Durchführung des Verfahrens ist die aus der WO 96/09456 bekannte Düse geeignet. Um einen Film aus der plastischen Substanz auf die Glastafel aufzutragen, öffnet man die Düse zunächst nur einen schmalen Spalt breit, um sie danach, wenn ein Film von etwa 5 mm bis maximal einigen cm Länge auf die Glastafel aufgetragen worden ist, durch Betätigen des Schiebers stetig bis auf den im Einzelfall gewünschten Mündungsquerschnitt zu öffnen.

Vorteilhafter ist es, eine Düse zu verwenden, die gegenüber der aus der WO 96/09456 bekannten Düse dahingehend abgewandelt ist, daß ihre Mündung nicht nur der Bewegungsrichtung in einer Ebene parallel zur Glastafel entgegengesetzt ausgerichtet ist, sondern zusätzlich ein kleinere Teil ihrer Mündung jener Ebene, in welche die Glastafel liegt, auf die der Strang aufgetragen werden soll, zugewandt ist. Eine solche Düse hat den Vorteil, daß der sich beim Öffnen zunächst bildende Spalt der Glastafel zugewandt ist, so daß das aus dem Spalt austretende plastische Material mit wesentlich höherem Druck auf die Glastafel trifft als bei einer im wesentlichen parallel zur Glastafeloberfläche verlaufenden Fließrichtung der Substanz. Mit der neuen Düse erreicht man deshalb, daß der zunächst gebildete Film sich erstklassig mit der Glastafeloberfläche verbindet, ohne Luftanschlüsse und Kapillaren, durch die andernfalls später Wasserdampf diffundieren könnte. Die neue Düse bewährt sich aber nicht nur beim Auftragen des Films, sondern beim Auftragen des Strangs auf seiner gesamten Länge, denn auch dann, wenn sich der Schieber weiter öffnet, um den Strang in seinem gewünschten Querschnitt auf die Glastafel aufzutragen, hat die Fließrichtung der Substanz aus der Mündung der Düse heraus eine stärkere Komponente in Richtung auf die Glastafel als im Falle der aus der WO 96/09456 bekannten Düse, so daß die Qualität der Verklebung des Strangs mit der Glastafel insgesamt verbessert wird.

In Bewegungsrichtung des zweiten Antriebs der Düse gemessen sollte sich der gegen die Glastafel gerichtete Abschnitt der Mündung zweckmäßigerweise über nicht mehr als 3mm Länge, vorzugsweise über nicht mehr als 2mm Länge erstrecken. Bei einer solchen Beschränkung des gegen die Glastafel gerichteten Teils des Mündungsquerschnitts kann man noch eine hervorragende Eckenausbildung erzielen, wenn man die Düse im Bereich der Ecken der Glastafel um eine zu dieser senkrechte Achse verschwenkt, welche in dem ebenen, größeren Teil der Mündung liegen soll, welcher der Bewegungsrichtung des zweiten Antriebs der Düse entgegengesetzt ausgerichtet ist.

Die die Mündung der Düse begrenzenden Seitenwände erstrecken sich zweckmäßigerweise rechtwinklig zu jener Ebene, in welcher die Glastafel liegt, bis zum Boden der Düse, damit die Dicke des Films zu seinen beiden Rändern hin nicht zunimmt. Vorzugsweise nimmt die Dicke des Films zu seinen beiden Rändern hin ab.

Um einen möglichst dünnen, geschlossenen Film zu erzielen, sollte der der Glastafel zugewandteTeil der Mündung der Düse einen zur Glastafel parallelen Rand haben, wobei jedoch der Boden der Düse im übrigen mit der Glastafel einen spitzen Winkel einschließen sollte, um das Auftragen des Endabschnitts des Stranges auf die Schrägfläche des Anfangsabschnitts des Stranges zu erleichtern.

Die Wand an der Spitze des Schiebers, welche beim Schließen der Düse in den der Glastafel zugewandten Teil der Mündung taucht, schließt mit der Glastafel vorzugsweise einen sich in die Bewegungsrichtung des zweiten Antriebs der Düse öffnenden spitzen Winkel ein. Der Vorteil dieser Maßnahme liegt darin, daß diese Wand an der Spitze des Schiebers beim Auftragen des Films wie ein Spachtel wirkt, welcher den Film an die Glastafel drückt. Ein günstiger Winkel für diese Aufgabe ist 4°.

Der kleinere Teil der Mündung, welcher der zu beschichtenden Glastafel zugewandt ist, kann durch eine Ausnehmung im Boden der Düse, aber auch durch eine Ausnehmung an der Spitze des Schiebers gebildet sein, welche erst dann wirksam wird, wenn der Schieber ein klein wenig zurückgezogen ist. Die beiden Maßnahmen können auch miteinander kombiniert werden. Befindet sich die Ausnehmung im Boden der Düse, dann hat das den Vorteil, daß man beim Extrudieren des Stranges über dessen gesamte Länge einen höheren Druck auf die Glastafel bringt. Sieht man die Ausnehmung im Schieber vor, dann hat das den Vorteil, daß der Verlauf des Stranges beim Bilden von Ecken durch Drehen der Düse um eine zur Glastafel senkrechte, in der Mündung liegende Achse etwas günstiger ist.

Statt die Düse entlang einer ruhenden Glastafel zu bewegen, kann man auch die Düse ruhen lassen und statt dessen die Glastafel an der Düse entlangbewegen. Diese beiden Bewegungsarten können auch miteinander kombiniert werden

Ausführungsbeispiele der Erfindung sind schematisch in den beigefügten Zeichnungen dargestellt. Gleiche oder einander entsprechende Teile sind in den verschiedenen Beispielen mit übereinstimmenden Bezugszahlen bezeichnet.
- Figur 1: zeigt einen Längsschnitt durch eine Düse zum Auftragen eines plastischen Strangs auf eine Glastafel,
- Figur 2: zeigt die Ansicht II der Düse aus Figur 1,
- Figur 3: zeigt als vergrößertes Detail einen Schnitt durch die Spitze der Düse aus Figur 1,
- Figur 4: zeigt die Ansicht auf die Unterseite der Düse gemäß Figur 3,
- Figur 5: zeigt die Ansicht V der Düse gemäß Figur 3, die
- Figuren 6 - 9: zeigen in vereinfachtem Längsschnitt die Düse in verschiedenen Arbeitsphasen, die
- Figuren 10-12: zeigen eine zweite Ausführungsform der Düse in Darstellungen entsprechend den Figuren 3 bis 5,
- Figur 13: zeigt eine dritte Ausführungsform der Düse in einer Darstellung entsprechend der Figur 3,
- Figur 14: zeigt den Querschnitt XIV - XIV durch die Düse in Figur 13, die
- Figuren 15-18: zeigen in einem vereinfachten Längsschnitt die Düse aus den Figuren 13 und 14 in unterschiedlichen Arbeitsphasen entsprechend den Figuren 6 bis 9,
- Figur 19: zeigt eine erfindungsgemäße Vorrichtung mit einer der vorstehend dargestellten Düsen in der Vorderansicht,
- Figur 20: zeigt dieselbe Vorrichtung in einer teilweise geschnittenen Seitenansicht,
- Figur 21: zeigt einen Längsschnitt durch eine Düse gemäß dem Stand der Technik,
- Figur 22: zeigt die Verbindungsstelle zwischen Anfang und Ende des Strangs in einem plastischen Abstandhalter für Isolierglas, und
- Figur 23: zeigt als Detail aus Figur 22 die für die Dichtheit einer Isolierglasscheibe kritische Stelle in einem plastischen Abstandhalter.

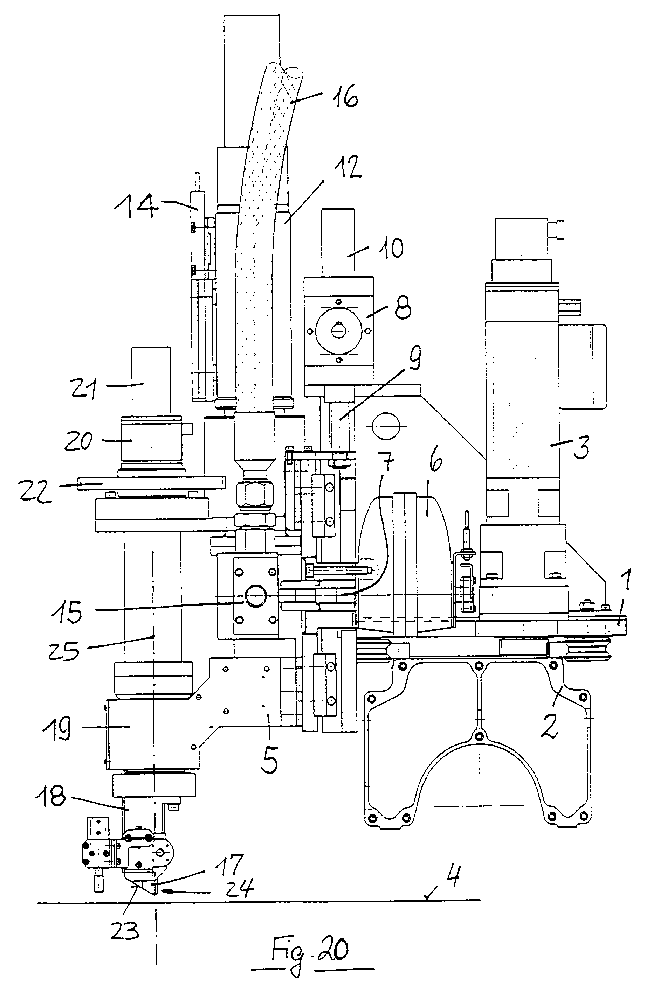

Die in den Figuren 19 bis 21 dargestellte Vorrichtung ist aus der WO 96/09456 bekannt und kann in ihrem Grundaufbau auch für die Zwecke der vorliegenden Erfindung verwendet werden.

Die Vorrichtung hat einen Träger 1, welcher längs einer Traverse 2 durch einen Antrieb 3 senkrecht zur Zeichenebene der Figur 20 verschiebbar ist. Die Traverse selbst ist parallel zu einer Ebene 4, in welcher bei der Bearbeitung die Oberfläche einer Glastafel liegt, rechtwinklig zur Längserstreckung der Traverse 2 verschiebbar. Am Träger 1 ist ferner ein Block 5 angebracht, welcher von einem Drehzylinder 6 um eine zur Ebene 4 parallele, in der Zeichenebene der Figur 20 liegende Achse 7 verschiebbar und durch einen aus einem Elektromotor 8 und einer Spindel 9 bestehenden Antrieb senkrecht zur Ebene 4 verschiebbar ist. Um diese Bewegung in kontrollierbarem Ausmaß und mit kontrollierbarer Geschwindigkeit durchführen zu können, ist der Motor 8 mit einem Rotorlage- und Geschwindigkeitsgeber 10 verbunden.

Der Block 10 trägt zwei im Wechsel betriebene nachfüllbare Kolben-Zylinder-Einheiten 11 und 12 für das Zwischenspeichern und Abgeben der plastischen Substanz, aus welcher Abstandhalter gebildet werden sollen. Die Kolben-Zylinder-Einheiten 11 und 12 sind jeweils mit einem Füllstandsanzeiger 13, 14 mit Endschalter ausgerüstet. Die beiden Kolben-Zylinder-Einheiten 11 und 12 fußen auf einem gemeinsamen Ventilblock 15, in welchen ein beheizter Druckschlauch 16 mündet, durch welchen die Zylinder mit der plastischen Substanz versorgt werden. Im Ventilblock 15 befindet sich ein Drehschieber, welcher abwechselnd die eine Kolben-Zylinder-Einheit 11 oder 12 mit dem Druckschlauch 16 und die andere Kolben-Zylinder-Einheit 12 bzw. 11 mit einer Düse 17 verbindet.

Die Düse 17 befindet sich an der Spitze einer hohlen Düsenwelle 18, welche drehbar in einer Halterung 19 gelagert ist, in welcher über eine an sich bekannte Drehkupplung das von einer der Kolben-Zylinder-Einheiten 11, 12 ausgepreßte plastische Material in die hohle Düsenwelle 18 gelangt.

Zum Drehen der Düsenwelle 18 in ihrer Halterung 19 ist am Block 5 ein Drehantrieb 20 mit Schleifringübertrager 21 sowie Rotorlage- und Tachogeber 22 angebracht.

Die Düse 17 hat einen schräg zur Ebene 4 verlaufenden Boden 23, welcher spitz zuläuft und unmittelbar eine senkrecht zur Ebene 4 orientierte Mündung 24 der Düse begrenzt. Die Mündung 24 hat einen im wesentlichen rechteckigen Querschnitt. In der Mitte der Mündung läuft die Drehachse 25 der Düsenwelle 18 senkrecht zur Ebene 4.

Zum Verschließen der Mündung 24 ist ein Schieber 26 vorgesehen, welcher auswechselbar zwischen einer parallel zur Achse 25 verlaufenden Wand 27 der Düsenwelle und einem abnehmbaren Gegenhalter 28 angeordnet ist. Zwischen der Wand 27 und dem Gegenhalter 28 ist der Schieber 26 parallel zur Achse 25 verschiebbar geführt. Um ihn verschieben zu können, ist er mit einer Verzahnung 29 versehen, welche mit einem Ritzel 30 kämmt, welches durch einen an der Düsenwelle 18 angebrachten, kleinen Elektromotor 31 kontrolliert antreibbar ist. Die Schieberstellung ist durch ein Potentiometer 32 beeinflußbar.

Der Elektromotor 31 und der Motor 8 sind elektronisch miteinander synchronisiert.

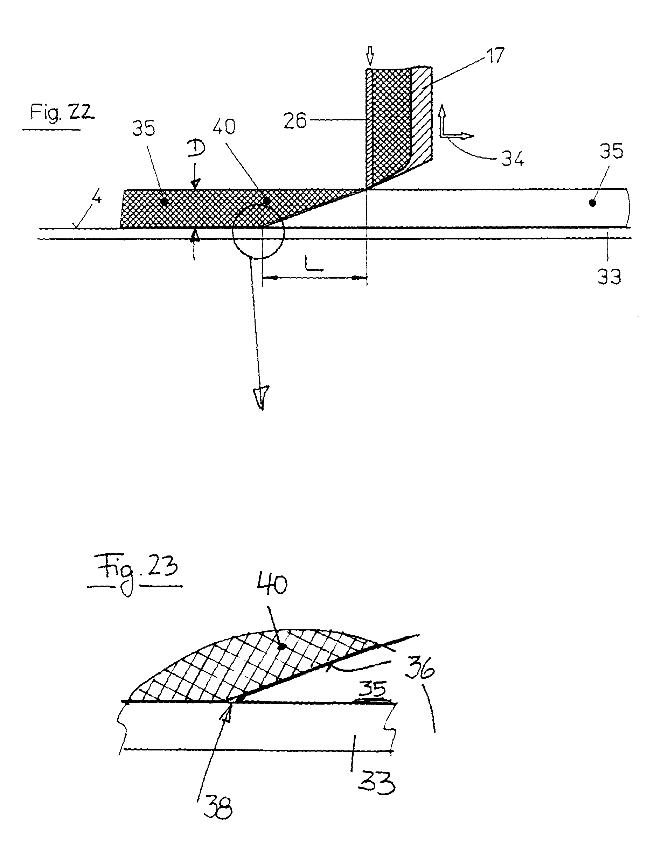

Zur Beschreibung der Arbeitsweise der Vorrichtung wird auf die Figur 22 Bezug genommen:

Eine Glastafel 33, auf welche ein plastischer Strang 35 als Abstandhalter aufgetragen werden soll, liegt in der Ebene 4. An die Glastafel wird die Düse 17 durch Betätigen des Motors 8 zugestellt, wobei sich der Schieber 26 zunächst in seiner Schließstellung befindet. Die Düse wird dann durch Bewegen längs der Traverse 2 und/oder durch Bewegen der Traverse 2 parallel zur Glastafel 33 in Richtung des Pfeils 34 bewegt, in einer der Mündung 24 entgegengesetzten Richtung. In der Startphase der Bewegung wird über eine Strecke der Länge L der Schieber 26 stetig geöffnet, bis er eine vorgegebene Stellung erreicht, in welcher der aus der Düse 17 austretende Strang 35 seine Solldicke D erreicht hat. Durch das stetige Öffnen des Schiebers 26 erhält der Strang 35 in der Startphase auf der Strecke L eine stetig zunehmende Dicke, so daß die Oberseite des Strangs dort durch eine Schrägfläche 36 gebildet ist.

Die Düse 17 wird nun parallel zur Glastafel 33 längs deren Randes um sie herumgeführt und legt dabei einen Strang von gleichbleibendem Querschnitt und gleichbleibender Dicke D auf der Glastafel 33 ab. Schließlich nähert sich die Düse 17 wieder ihrer Ausgangslage. Sie fährt unverändert weiter, bis sie mit ihrer Unterkante 37 die Spitze 38 des Anfangsabschnitts des Strangs 35 erreicht. Wegen des schrägen Verlaufs des Bodens 23 der Düse, deren Winkel etwas größer gewählt ist als der Winkel der Schrägfläche 36 mit der Glastafel 33, kommt es nicht zu einer flächigen Berührung des Bodens 23 mit der Schrägfläche 36. Im weiteren Verlauf der Bewegung der Düse 17 in Richtung des Pfeils 34 wird die Düse nun durch Betätigen des Motors 8 kontrolliert so angehoben, daß sich ihre Unterkante 37 längs der Schrägfläche 36 bewegt. Gleichzeitig und synchron dazu wird der Schieber 26 stetig vorgeschoben; er verschließt die Mündung, wenn die Unterkante 37 der Düse den oberen Rand 39 der Schrägfläche 36 erreicht hat (Figur 22). Auf diese Weise wird ein keilförmiger Endabschnitt 40 des Strangs gebildet, welcher komplementär zum Anfangsabschnitt des Strangs ausgebildet ist und auf ihm liegt.

Eine kritische Stelle für die Dichtheit der Isolierglasscheibe liegt an der Spitze 38 der Schrägfläche 36, wo eine schwer zu schließende Kapillare zwischen der Spitze 38, dem gegenüberliegenden Endabschnitt 40 und der Glastafel 33 auftreten kann. Dem Auftreten einer solchen Kapillare kann durch eine erfindungsgemäß ausgebildete Düse wirksam begegnet werden.

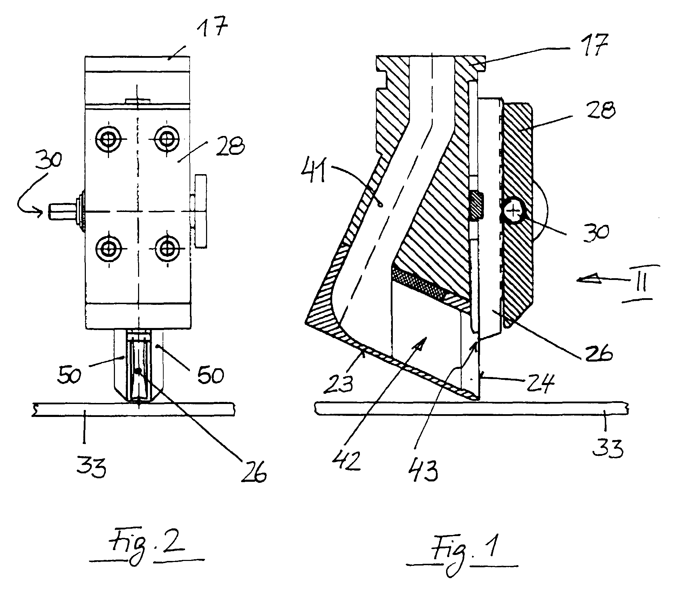

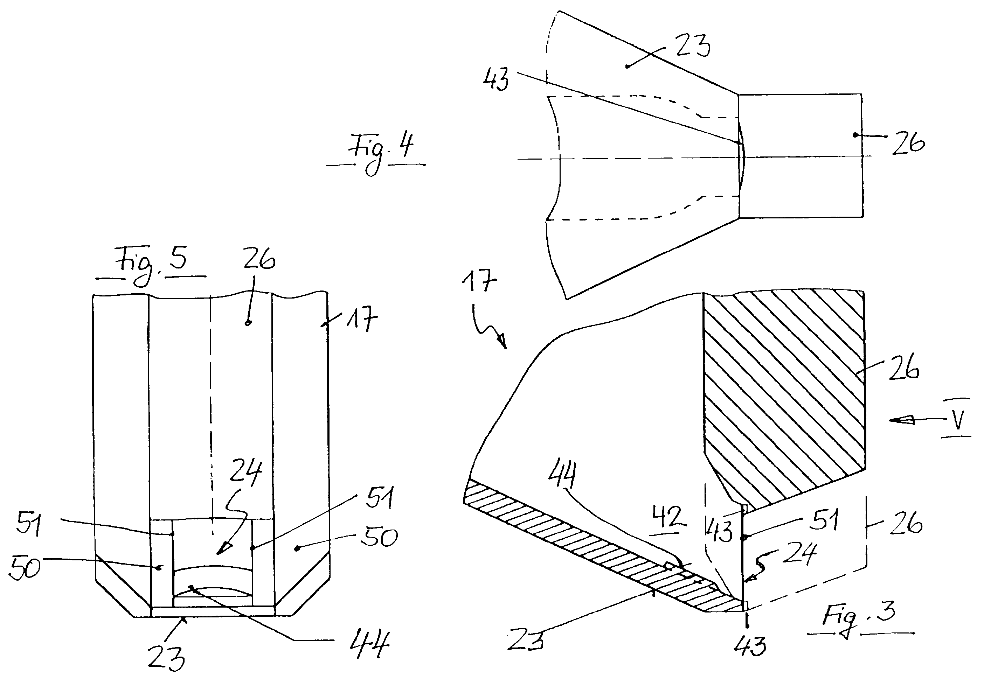

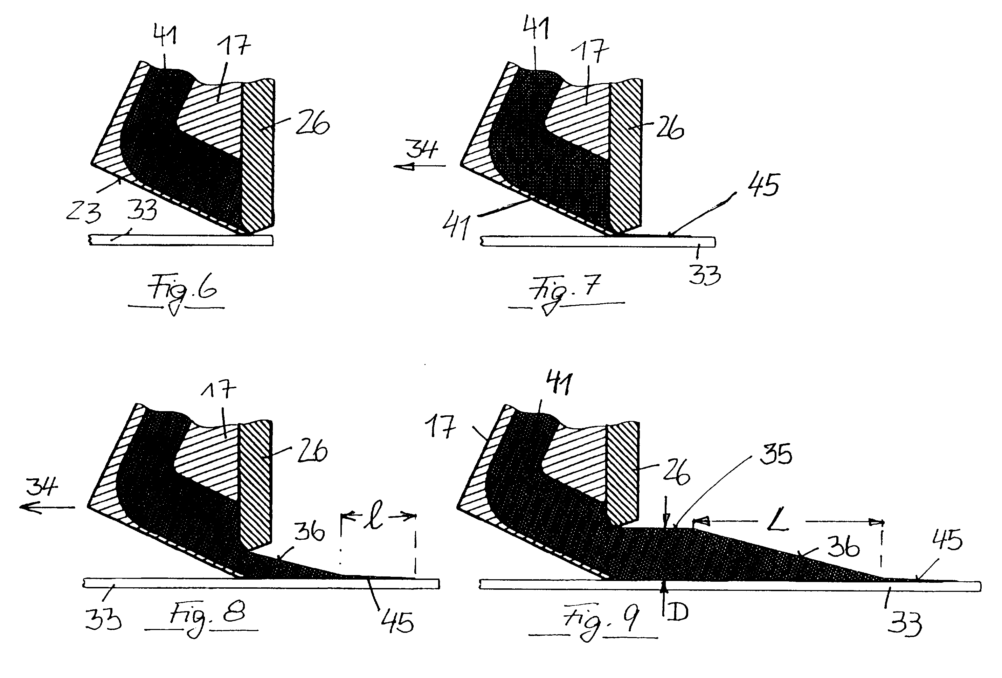

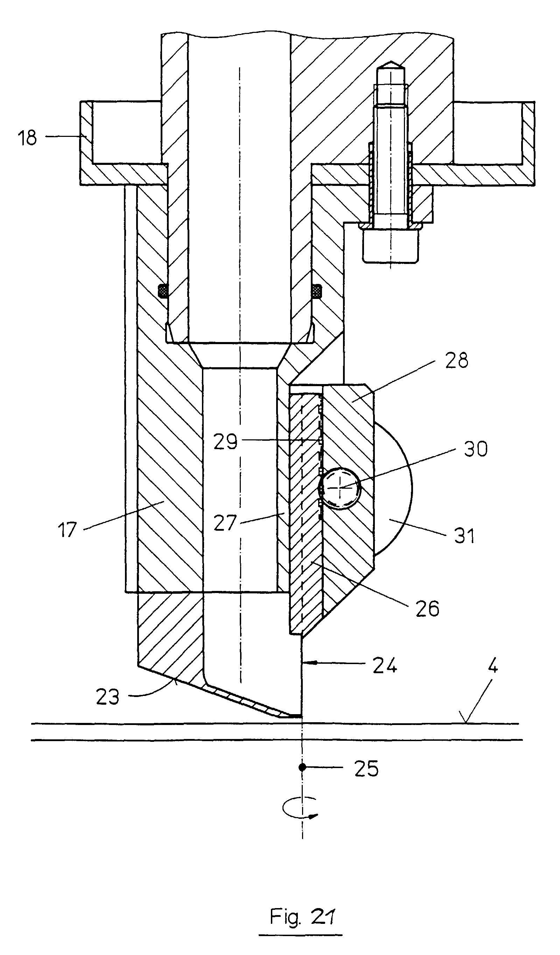

Bei der in den Figuren 1 und 2 dargestellten Düse 17, in welcher der Kanal 41, durch welchen das plastische Material zur Mündung 24 strömt, zur Bildung eines schräg gegen die Glastafel 33 gerichteten Endabschnittes 42 im Gegensatz zur Figur 21 abgewinkelt ausgebildet ist, ist an der Spitze des Schiebers 26 eine kleine, aber wichtige Ausnehmung 43 vorgesehen, welche deutlicher in den Figuren 3 und 4 dargestellt ist. Die Ausnehmung 43 ist sehr schmal und in der Höhe so klein, daß sie bei geschlossenem Schieber 26 - in Figur 3 gestrichelt dargestellt - durch den Boden 23 der Düse vollständig abgedeckt ist, so daß in der geschlossenen Stellung des Schiebers auch durch die Ausnehmung 43 kein Material austreten kann. Wird jedoch der Schieber 26 geringfügig vom Boden 23 angehoben, dann ergibt sich eine Verbindung mit spaltförmigem Querschnitt vom Endabschnitt 42 des Kanals in die Ausnehmung 43 hinein, so daß durch die Ausnehmung 43 hindurch ein dünner Film des plastischen Materials gegen die Ebene 4 gerichtet, in welcher die Glastafel 33 liegt, austreten kann. Die Querschnittsgestalt der Ausnehmung 43 sieht man in Figur 4: Die Ausnehmung 43 ist im Querschnitt ein Kreisabschnitt mit geringer Höhe, so daß die Dicke des gebildeten Films von der Mitte des Films zu seinen beiden Rändern hin abnimmt.

In einem geringen Abstand von der Mündung 24 ist der Boden 23 mit einer Wölbung 44 versehen, welche dann wirksam wird, wenn der Schieber 26 so weit angehoben ist, daß nicht nur ein Film durch die Ausnehmung 43 hindurch gebildet wird. Die Wölbung 44 hat die Wirkung, daß der Strang 35 an seiner der Glastafel 33 zugewandten Seite schwach konkav austritt und sich dann unter der Wirkung innerer Materialspannungen satt und vollflächig mit der Glastafel 33 verbindet.

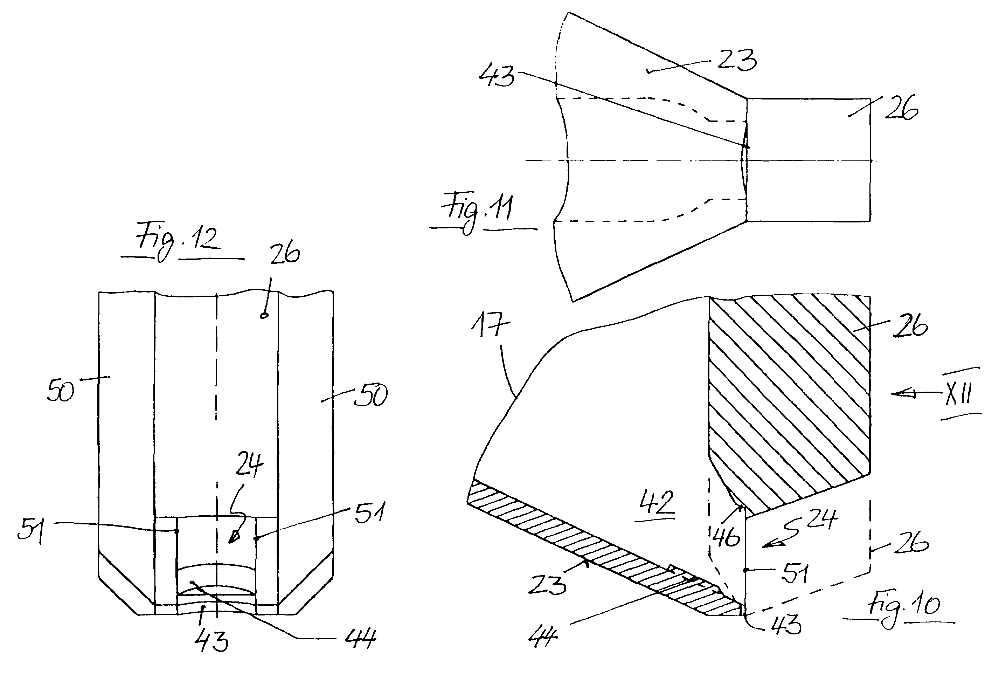

Die Arbeitsweise der erfindungsgemäßen Düse ist in den Figuren 6 bis 9 dargestellt. Figur 6 zeigt die Düse 17 an eine Glastafel 33 zugestellt vor Beginn des Auftragens der plastischen Substanz; der Schieber 26 hält die Düse 17 vollständig geschlossen. Mit Beginn der Bewegung der Düse 17 längs der Glastafel 33 in Richtung des Pfeils 34 (oder im Falle einer ruhenden Düse 17 bei Bewegung der Glastafel 33 in einer der Pfeilrichtung 34 entgegengesetzten Richtung) wird der Schieber 26 zunächst nur so wenig geöffnet, daß das plastische Material nur durch die Ausnehmung 43 austreten kann. Diese Stellung des Schiebers wird für eine Wegstrecke der Düse 17, welche vorzugsweise nur 0,5 cm bis höchstens einige cm beträgt, beibehalten. Die Fließrichtung des Materials ist senkrecht gegen die Glastafel gerichtet und bewirkt eine gute Haftung des Films 45 auf der Glastafel 33 (Figur 7). Hat der Film 45 die gewünschte Länge erreicht, wird der Schieber stetig fortschreitend vom Boden 23 entfernt, wodurch ein keilförmig ansteigender Anfangsabschnitt des Strangs 35 mit einer Schrägfläche 36 gebildet wird (Figur 8). Ist die gewünschte Höhe D des Stranges 35 erreicht (Figur 9), bleibt der Schieber 26 in seiner Stellung stehen und der Strang 35 wird längs des Randes der Glastafel 33 auf diese aufgetragen, bis sich die Düse 17 dem Anfangsabschnitt mit der Schrägfläche 36 nähert. Bevor die Schrägfläche 36 erreicht wird, wird der Strang 35 auf den Film 45 gelegt, mit welchem er sich dicht verbindet. Das Verbinden von Anfang und Ende des Strangs erfolgt dann längs der Schrägfläche 36, wie zuvor schon anhand der Figur 22 beschrieben. Anders als beim Stand der Technik, wo an der Spitze 38 der Schrägfläche 36 die Gefahr einer Undichtigkeit bestand, ist eine solche Gefahr durch die Erfindung beseitigt, weil sich die Spitze der Schrägfläche 36 in den dünnen Film 45 fortsetzt. An der Spitze des dünnen Films 45 sind die Voraussetzungen für eine lückenlose Verbindung mit dem daraufgelgten Strang 35 ungleich besser als beim Stand der Technik.

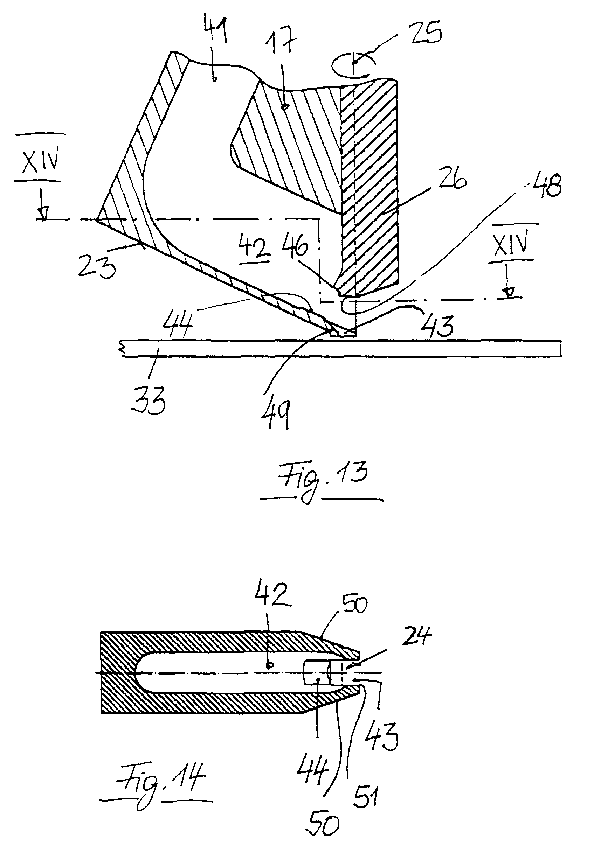

Das in den Figuren 10 bis 12 dargestellte Ausführungsbeispiel der Erfindung unterscheidet sich von dem in Figuren 3 bis 5 dargestellten Ausführungsbeispiel darin, daß die Ausnehmung 43 nicht im Schieber 26, sondern im Boden 23 vorgesehen ist. Verschließbar ist die Ausnehmung 43 in diesem Fall durch eine an der Innenseite des Schiebers ausgebildete Stufe 46, deren Neigung mit der Neigung des Bodens 23 übereinstimmt und in Schließstellung des Schiebers 26 die Ausnehmung 43 überdeckt. Die Arbeitsweise dieser Düse entspricht der Arbeitsweise der Düse aus den Figuren 3 bis 5; es wird dazu auf die Figuren 6 bis 9 verwiesen.

Die in den Figuren 13 und 14 dargestellte dritte Ausführungsform der Erfindung unterscheidet sich von der zweiten Ausführungsform dadurch, daß die Ausnehmung 43 im Boden 23 der Düse größere Abmessungen hat als im Ausführungsbeispiel gemäß den Figuren 10 bis 12: Die Ausnehmung 43 erstreckt sich in Bewegungsrichtung 34 der Düse 17 über eine Länge von 2mm bis 3mm. Um sie verschließen zu können, hat der Schieber 26 einen einwärts gerichteten Fortsatz 47 mit einer Stufe 46, welche bei geschlossenem Schieber 26 auf dem Boden 23 am Rand der Ausnehmung 43 sitzt. An der Spitze des Schiebers 26 ist eine Schrägfläche 48 ausgebildet, welche gegenüber der Glastafel 33 schwächer geneigt ist als der Boden 23, vorzugsweise einen Winkel von 4° gegenüber der Glastafel 33 aufweist und beim Auftragen des Films 45 wie ein Spachtel wirkt, der den Film zusätzlich an die Glastafel 33 drückt.

Im Boden 23 ist am Rand der Ausnehmung 43 eine weitere Schrägfläche 49 vorgesehen, welche einen fließenden Übergang vom Boden 23 in die Ausnehmung 43 ermöglicht. Der Schrägfläche 49 gegenüber liegt der Schieber 26 mit seinem Fortsatz 47 und zwingt dem zur Mündung 24 fließenden Material eine Änderung der Fließrichtung in Richtung auf die Ausnehmung 43 auf. Das plastische Material tritt deshalb nicht nur beim Auftragen des Films 45, sondern auch beim Auftragen des Strangs 35 mit einer verstärkt gegen die Glastafel 33 gerichteten Bewegungskomponente aus der Düse 17 aus und haftet dadurch besser an der Glastafel 33.

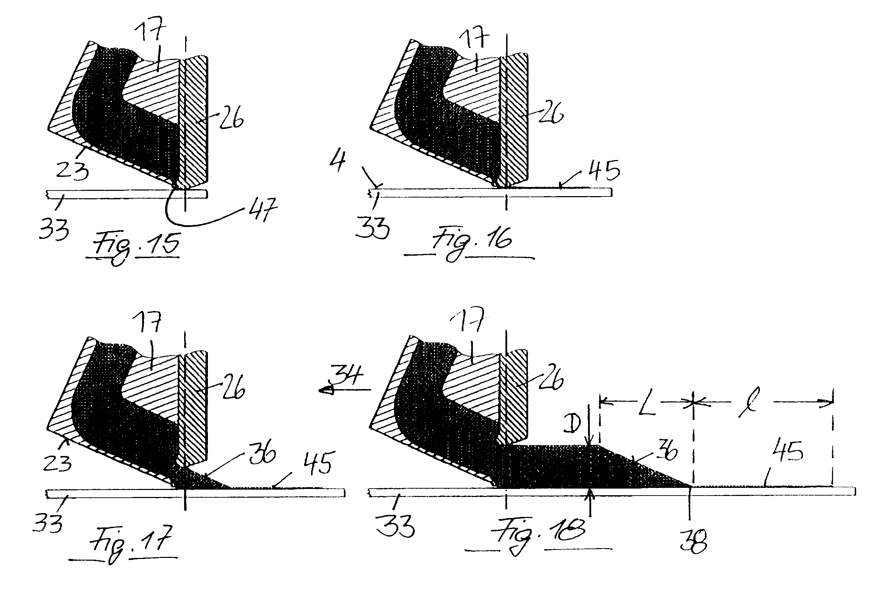

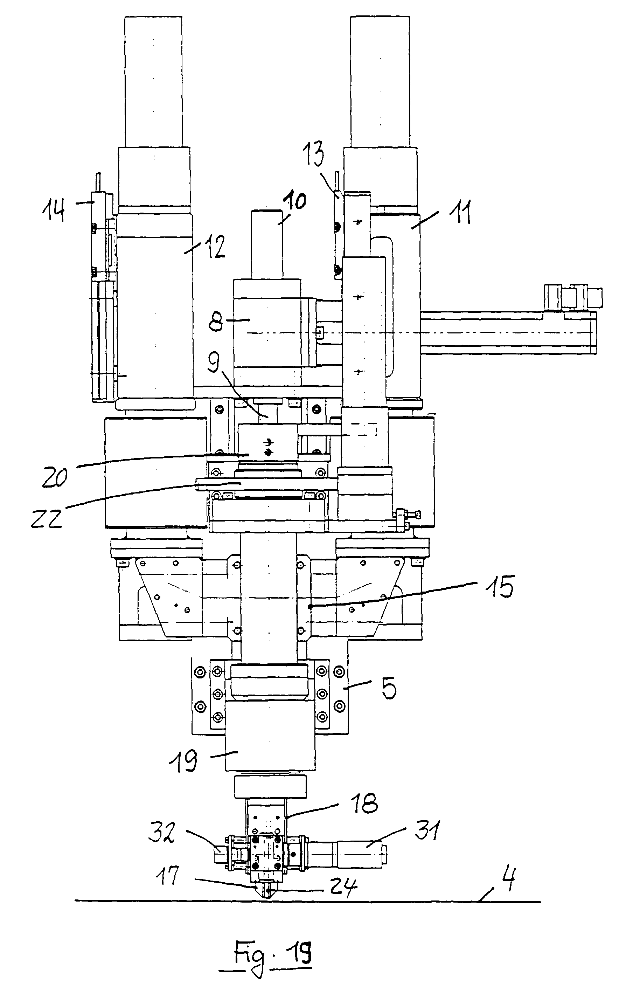

Die Figuren 15 bis 18 zeigen für die Düse aus den Figuren 13 und 14 die Arbeitsphasen entsprechend den Figuren 6 bis 9.

In allen Ausführungsbeispielen liegt die Drehachse 25 der Düse, welche senkrecht zur Glastafel 33 verläuft, in der Ebene des Hauptteiles 24 der Mündung, welcher wie beim Stand der Technik der Bewegungsrichtung 34 entgegengerichtet ist, so daß ein Abstandhalter mit einwandfrei konturierten Ecken unterbrechungsfrei extrudiert werden kann. Die seitlichen Wände 50 der Düse, welche deren Mündung seitlich begrenzen, verlaufen mit ihrem Rand 51 zunächst senkrecht zur Glastafel 33 und dann parallel zurGlastafel 33. Der erfindungsgemäß i vorgesehene, durch die Ausnehmung 43 gebildete zusätzliche Mündungsquerschnitt ist ausschließlich gegen die Glastafel 33 gerichtet.

## Patentansprüche

1. Verfahren zum Auftragen eines Strangs (35) aus einer plastischen Substanz auf eine Glastafel (33) zur Bildung eines Abstandhalters mit vorgegebener Solldicke D für eine Isolierglasscheibe
mit Hilfe einer Düse (17), welche längs des Randes der Glastafel (33) um diese herumbewegt wird und dabei den aus der Düse (17) austretenden Strang so auf die Glastafel (33) legt, daß Anfang und Ende des Strangs (35) zusammenstoßen,
indem die Dicke des Strangs (35) beim Austreten aus der Düse (17) auf einer Strecke mit vorbestimmter Länge L auf die Solldicke D gesteigert und komplementär dazu am Ende des Strangs (35) über die an Anfang des Strangs gebildete Schrägfläche (36) hinweg von der Solldicke D auf Null verringert wird,
**dadurch gekennzeichnet,** daß der Strang (35) durch die Düse (17) so geformt wird, daß beim Austreten aus der Düse (17) seine Oberfläche, welche der Glastafel (33) zugewandt ist, auf welche der Strang (35) gelegt wird, schwach konkav ist.

2. Verfahren nach Anspruch 1, **dadurch gekennzeichnet,** daß die gegenüberliegende Oberfläche des Strangs (35) schwach konvex geformt wird.

3. Verfahren nach Anspruch 1 oder 2, dadurch **gekennzeichnet,** daß mit der Düse (17) zuerst ein Film (45) aus der plastischen Substanz auf einer Länge (l) auf die Glastafel (33) aufgetragen und anschließend die Dicke des Strangs (35) beim Austreten aus der Düse (17) auf einer Strecke mit vorbestimmter Länge L von der Dicke des Films (45) auf die Solldicke D gesteigert und komplementär dazu am Ende des Strangs (35) über die an Anfang des Strangs gebildete Schrägfläche (36) hinweg von der Solldicke D wieder auf Null verringert wird,

4. Verfahren nach Anspruch 3, **dadurch gekennzeichnet,** daß der Film (45) nicht dicker als 0,3mm ausgebildet wird.

5. Verfahren nach Anspruch 4, **dadurch gekennzeichnet,** daß der Film (45) 0,1mm bis 0,2mm dick ausgebildet wird.

6. Verfahren nach einem der Ansprüche 3 bis 5, **dadurch gekennzeichnet,** daß der Film (45) nicht mehr als einige wenige cm lang ausgebildet wird.

7. Verfahren nach Anspruch 6, **dadurch gekennzeichnet,** daß der Film (45) 0,5cm bis 1cm lang ausgebildet wird.

8. Vorrichtung zum Durchführen des Verfahrens nach einem der vorstehenden Ansprüche mit einer Düse (17), deren Mündung (24) einen annähernd rechteckigen Querschnitt hat und durch einen Schieber (26) verschließbar ist,
mit einem ersten Antrieb (31) zum Betätigen des Schiebers (26),
mit einem zweiten Antrieb (3) zum Bewegen der Düse (17) in einer Ebene (4), parallel zur Glastafel (33)
und mit einem dritten Antrieb (8) zum Bewegen der Düse (17) quer zur Ebene der Glastafel (33),
wobei die Düse an ihrem zur Scheibe gerichteten Ende einen Boden (23) aufweist und die Mündung (24) der Düse (17) im wesentlichen der Bewegungsrichtung (34) der Düse (17), welche parallel zur Scheibe erfolgt, entgegengesetzt ausgerichtet ist,
**dadurch gekennzeichnet,** daß daß der Boden (23) der Düse (17) in der Nähe ihrer Mündung (24) nach innen konvex gewölbt ausgebildet ist.

9. Vorrichtung nach Anspruch 8, **dadurch gekennzeichnet,** daß die Mündung (24) der Düse (17) im Bereich des Bodens (23) zusätzlich mit einem kleineren Teil (43) ihres Querschnitts jener Ebene (4) zugewandt ist.

10. Vorrichtung nach Anspruch 9, **dadurch gekennzeichnet,** daß die Mündung (24) der Düse (17) durch Seitenwände (50) begrenzt ist, deren Ränder (51) sich vom Boden (23) rechtwinklig zur Glastafelebene erstrecken.

11. Vorrichtung nach Anspruch 8, 9 oder 10, **dadurch gekennzeichnet,** daß der Boden (23) mit der Glastafelebene einen sich in die Bewegungsrichtung (34) der Düse (17) parallel zur Glastafel öffnenden, ersten spitzen Winkel einschließt, wobei aber der der Glastafelebene zugewandte Teil (43) der Mündung (24) einen zur Glastafelebene parallelen Rand hat.

12. Vorrichtung nach einem der Ansprüche 8 bis 11, **dadurch gekennzeichnet,** daß die Wand (48) an der Spitze des Schiebers (26), welche beim Schließen der Düse (17) in den der Glastafelebene zugewandten Teil (43) der Mündung (24) taucht, mit dieser Ebene einen sich in die Bewegungsrichtung (34) des zweiten Antriebs (3) öffnenden, zweiten spitzen Winkel einschließt.

13. Vorrichtung nach Anspruch 12, **dadurch gekennzeichnet,** daß der zweite spitze Winkel 4° beträgt.

14. Vorrichtung nach einem der Ansprüche 8 bis 13, **dadurch gekennzeichnet,** daß die Düse (17) um eine senkrecht zur Glastafelebene verlaufende, im ebenen Hauptteil (24) der Mündung liegende Achse (25) drehbar ist.

15. Vorrichtung nach einem der Ansprüche 8 bis 14, **dadurch gekennzeichnet,** daß sich der der Glastafelebene zugewandte kleinere Teil (43) der Mündung in Bewegungsrichtung (34) der Düse (17) parallel zur Scheibe über nicht mehr als 3mm, vorzugsweise 2mm, erstreckt.

16. Vorrichtung nach einem der Ansprüche 8 bis 15, **dadurch gekennzeichnet,** daß der der Glastafelebene zugewandte Teil (43) der Mündung der Düse (17) durch eine an der Spitze des Bodens (23) der Düse (17) vorgesehene Ausnehmung gebildet ist.

17. Vorrichtung nach einem der Ansprüche 8 bis 16, **dadurch gekennzeichnet,** daß der der Glastafelebene zugewandte Teil (43) der Mündung der Düse (17) durch eine an der Spitze des Schiebers (26) vorgesehene Ausnehmung gebildet ist.

## Revendications

1. Procédé pour l'application d'un boudin (35) constitué d'une substance plastique sur un pan de verre (33) pour la formation d'un écarteur possédant une épaisseur de consigne D prédéfinie pour une vitre isolante
à l'aide d'une buse (17) qui se déplace le long du bord du pan de verre (33) en tournant autour et qui dépose en l'occurrence le boudin sortant de la buse (17) sur le pan de verre (33) de telle sorte que le début et la fin du boudin (35) se rencontrent,
dans lequel l'épaisseur du boudin (35) lors de sa sortie de la buse (17) augmente sur un tronçon de longueur L prédéfinie pour atteindre l'épaisseur de consigne D et, de manière complémentaire, à la fin du boudin (35), via la surface chanfreinée (36) formée au début du boudin, diminue en s'écartant de l'épaisseur de consigne D pour atteindre la valeur zéro,
caractérisé en ce que l'on forme le boudin (35) à travers la buse (17) de telle sorte qu'à sa sortie de la buse (17) sa surface qui est tournée vers le pan de verre (33) sur lequel on dépose le boudin (35) est légèrement concave.

2. Procédé selon la revendication 1, caractérisé en ce que la surface opposée du boudin (35) est de forme légèrement convexe.

3. Procédé selon la revendication 1 ou 2, caractérisé en ce qu'on applique, avec la buse (17), d'abord un film (45) constitué de la substance plastique, sur une longueur (1) sur le pan de verre (33) et on augmente ensuite l'épaisseur du boudin (35) lors de sa sortie de la buse (17) sur un tronçon de longueur L prédéfinie, depuis l'épaisseur de film 45 jusqu'à l'épaisseur de consigne D, et de manière complémentaire, à la fin du boudin (35), via la surface chanfreinée (36) formée au début du boudin, on diminue l'épaisseur en s'écartant de l'épaisseur de consigne D pour atteindre la valeur zéro.

4. Procédé selon la revendication 3, caractérisé en ce que le film (45) est réalisé avec une épaisseur qui n'est pas supérieure à 0,3 mm.

5. Procédé selon la revendication 4, caractérisé en ce que le film (45) est réalisé avec une épaisseur de 0,1 mm à 0,2 mm.

6. Procédé selon l'une quelconque des revendications 3 à 5, caractérisé en ce qu'on réalise le film (45) avec une longueur qui n'est pas supérieure à quelques centimètres.

7. Procédé selon la revendication 6, caractérisé en ce que le film (45) est réalisé avec une longueur de 0,5 cm à 1 cm.

8. Dispositif pour la mise en oeuvre du procédé selon l'une quelconque des revendications ci-dessus, comprenant une buse (17) dont l'embouchure (24) possède une section transversale approximativement carrée et peut être obturée à l'aide d'un coulisseau (26),
une première commande (31) pour l'entraînement du coulisseau (26),
une seconde commande (3) pour le déplacement de la buse (17) dans un plan (4) parallèle au pan de verre (33),
et une troisième commande (8) pour le déplacement de la buse (17) transversalement par rapport au plan du pan de verre (33)
dans lequel la buse présente à son extrémité tournée vers la vitre, une base (23) et l'embouchure (24) de la buse (17) est orientée essentiellement dans le sens opposé au sens de déplacement (34) de la buse (17) qui s'étend parallèlement à la vitre,
caractérisé en ce que la base (23) de la buse (17) présente, à proximité de son embouchure (24), un bombement convexe tourné vers l'intérieur.

9. Dispositif selon la revendication 8, caractérisé en ce que l'embouchure (24) de la buse (17), dans la zone de la base (23), est en outre tournée, avec la partie plus petite (43) de sa section transversale, vers ce plan (4) .

10. Dispositif selon la revendication 9, caractérisé en ce que l'embouchure (24) de la buse (17) est délimitée par des parois latérales (50) dont les bords (51) s'étendent depuis la base (23) perpendiculairement au plan du pan de verre.

11. Dispositif selon la revendication 8, 9 ou 10, caractérisé en ce que la base (23) inclut, avec le plan du pan de verre, un premier angle aigu s'ouvrant dans la direction de déplacement (34) de la buse (17) parallèlement au pan de verre, mais dans lequel, la partie (43) de l'embouchure (24) tournée vers le plan du pan de verre possède un bord parallèle au plan du pan de verre.

12. Dispositif selon l'une quelconque des revendications 8 à 11, caractérisé en ce que la paroi (48) à l'extrémité du coulisseau (26) qui, lors de la fermeture de la buse (17), pénètre dans la partie (43) de l'embouchure (24) tournée vers le plan du pan de verre, inclut avec ce plan un deuxième angle aigu, s'ouvrant dans la direction de déplacement (34) de la deuxième commande (3).

13. Dispositif selon la revendication 12, caractérisé en ce que le deuxième angle aigu possède une valeur de 4°.

14. Dispositif selon l'une quelconque des revendications 8 à 13, caractérisé en ce que la buse (17) est rotative autour d'un axe (25) s'étendant perpendiculairement au plan du pan de verre et situé dans la partie principale plane (24) de l'embouchure.

15. Dispositif selon l'une quelconque des revendications 8 à 14, caractérisé en ce que la partie plus petite (43) de l'embouchure, tournée vers le plan du pan de verre, s'étend, dans la direction de déplacement (34) de la buse (17) parallèlement à la vitre, sur une distance qui n'est pas supérieure à 3 mm, de préférence sur une distance de 2 mm.

16. Dispositif selon l'une quelconque des revendications 8 à 15, caractérisé en ce que la partie (43) de l'embouchure de la buse (17), tournée vers le plan du pan de verre, est formée par un évidement prévu à l'extrémité de la base (23) de la buse (17).

17. Dispositif selon l'une quelconque des revendications 8 à 16, caractérisé en ce que la partie (43) de l'embouchure de la buse (17), tournée vers le pan du plan de verre, est formée par un évidement prévu à l'extrémité du coulisseau (26).

## Claims

1. A process for applying a plastic strand (35), of a plastic substance, onto a glass panel (33) for forming a spacer with a predetermined intended thickness D for an insulating glass pane,
using a nozzle (17) which is moved along the edge of the glass panel (33) around the latter and which deposits the strand emerging from the nozzle (17) onto the glass panel (33) so that the beginning and the end of the strand (35) abut one another,
by increasing the thickness of the strand (35), as it emerges from the nozzle (17), over a predetermined length L from zero to the intended thickness D, and decreasing it from the intended thickness D to zero, in complementary fashion, at the end of the strand (35) along the inclined surface (36) formed at the beginning of the strand,
**wherein** the strand (35) is shaped by the nozzle (17) in such a way that the strand surface facing the glass panel (33), onto which the strand (35) is applied, is slightly concave as it emerges from the nozzle (17).

2. The process as defined in Claim 1, **wherein** the opposite surface of the strand (35) is shaped to exhibit a slight convexity.

3. The process as defined in Claim 1 or 2, **wherein** as a first step a film (45) of the plastic substance is applied by the nozzle (17) onto the glass panel (33) over a length (I), whereafter the thickness of the strand (35) is increased, as it emerges from the nozzle (17), over a predetermined intended length L from the thickness of the film (45) to the predetermined intended thickness D and is then decreased from the intended thickness D to zero, in complementary fashion, at the end of the strand (35) along the inclined surface (36) formed at the beginning of the strand.

4. The process as defined in Claim 3, **wherein** the film (45) is applied with a thickness of maximally 0.3 mm.

5. The process as defined in Claim 4, **wherein** the film (45) is applied with a thickness of 0.1 mm to 0.2 mm.

6. The process as defined in Claims 3 to 5, **wherein** the film (45) is given a length of a few centimeters only.

7. The process as defined in Claim 6, **wherein** the film (45) is given a length of 0.5 cm to 1 cm.

8. A device for carrying out the process as defined in one of the preceding Claims, having a nozzle (17), whose outlet opening (24) exhibits a substantially rectangular cross-section and can be closed off by a slide valve (26),
having a first drive system (31) for actuation of the slide valve (26),
having a second drive system (3) to move the nozzle (17) in a plane (4), in parallel to the glass panel (33),
and having a third drive system (8) to move the nozzle (17) in transverse direction to the plane of the glass panel (33),
the nozzle being provided with a bottom (23) at its end facing the pane, and the outlet opening (24) of the nozzle (17) being directed substantially opposite to the direction of movement (34) of the nozzle (17), which moves in parallel to the pane,
**wherein** the bottom (23) of the nozzle (17) exhibits an inwardly concave curvature adjacent its outlet opening (24).

9. The device as defined in Claim 8, **wherein** the outlet opening (24) of the nozzle (17) has a smaller portion (43) of its cross-section, in the area of its bottom (23), additionally facing the said plane (4).

10. The device as defined in Claim 9, **wherein** the outlet opening (24) of the nozzle (17) is delimited by side walls (50), the edges (51) of which extend at a right angle from the bottom (23) to the plane of the glass panel.

11. The device as defined in Claim 8, 9 or 10, **wherein** the bottom and the plane of the glass panel enclose between them a first acute angle opening in the direction of movement (34) of the nozzle (17), parallel to the glass panel, while the portion (43) of the outlet opening (24), which faces the plane of the glass panel, has an edge extending parallel to the plane of the glass panel.

12. The device as defined in one of Claims 8 to 11, **wherein** the wall (48) and the plane of the glass panel enclose between them, at the tip of the slide valve (26), that dips into the portion (43) of the outlet opening (24) facing the plane of the glass panel during closing of the nozzle (17), a second acute angle opening in the direction of movement (34) of the second drive system (3).

13. The device as defined in Claim 12, **wherein** the second acute angle is 4°.

14. The device as defined in one of Claims 8 to 13, **wherein** the nozzle (17) is arranged to rotate about an axis (25) extending in the level main portion (24) of the outlet opening, perpendicular to the plane of the glass panel.

15. The device as defined in one of Claims 8 to 11, **wherein** the smaller portion (43) of the outlet opening facing the plane of the glass panel extends in the direction of movement (34) of the nozzle 17, parallel to the pane, over maximally 3 mm, preferably maximally 2 mm.

16. The device as defined in one of Claims 8 to 15, **wherein** the portion (43) of the outlet opening of the nozzle (17), facing the plane of the glass panel, is formed by a recess provided on the tip of the bottom (23) of the nozzle (17).

17. The device as defined in one of Claims 8 to 16, **wherein** the portion (43) of the outlet opening of the nozzle (17), facing the plane of the glass panel, is formed by a recess provided on the tip of the slide valve (26).
